# EUROPÄISCHE PATENTSCHRIFT

(11) **EP 2 501 588 B1**
(45) Veröffentlichungstag und Bekanntmachung des Hinweises auf die Patenterteilung: **03.01.2018**
(21) Anmeldenummer: 10742741.1
(22) Anmeldetag: 31.07.2010
(51) Int. Cl.: B60R 16/03

(54) **BORDNETZ UND VERFAHREN UND VORRICHTUNG ZUM BETREIBEN DES BORDNETZES**
ELECTRIC POWER NETWORK, METHOD AND DEVICE FOR CONTROLLING THE ELECTRIC POWER NETWORK
RÉSEAU DE BORD, MÉTHODE ET DISPOSITIF DE COMMANDE DU RÉSEAU DE BORD

(30) Priorität: 19.11.2009 DE 102009053691
(43) Veröffentlichungstag der Anmeldung: 26.09.2012
(73) Patentinhaber: Bayerische Motoren Werke Aktiengesellschaft, 80809 München (DE)
(72) Erfinder: PROEBSTLE, Hartmut, 86159 Augsburg (DE); NEUDECKER, Rupert, 80796 Muenchen (DE); SIRCH, Ottmar, 85560 Ebersberg (DE)
(86) Internationale Anmeldenummer: PCT/EP2010/004699
(87) Internationale Veröffentlichungsnummer: WO 2011/060841

(56) Entgegenhaltungen:
- EP-A1- 1 591 320
- EP-A2- 2 079 148
- DE-A1- 19 755 050
- DE-A1-102005 004 330
- US-A1- 2003 072 977
- US-A1- 2003 184 314
- US-A1- 2007 090 808

## Beschreibung

Die Erfindung betrifft ein Bordnetz für ein Kraftfahrzeug und ein Verfahren und eine Vorrichtung zum Betreiben des Bordnetzes. Ein Bordnetz gemäß Stand der Technik ist aus der DE 197 55 050 bekannt. In modernen Kraftfahrzeugen werden hohe Anforderungen an ein elektrisches Bordnetz mit einem elektrischen Energiespeicher gestellt, insbesondere bei Kraftfahrzeugen, die in der Lage sind, Bewegungsenergie des Kraftfahrzeugs, beispielsweise im Rahmen eines Bremsvorgangs, in elektrische Energie umzuwandeln und dem Energiespeicher zurückzuführen.
Die Aufgabe, die der Erfindung zugrunde liegt, ist es, ein Bordnetz eines Kraftfahrzeugs und ein Verfahren und eine korrespondierende Vorrichtung zum Betreiben des Bordnetzes zu schaffen, das bzw. die einen effizienten Betrieb von Verbrauchern ermöglicht.
Die Aufgabe wird gelöst durch die Merkmale der unabhängigen Patentansprüche. Vorteilhafte Ausgestaltungen der Erfindung sind in den Unteransprüchen gekennzeichnet.
Die Erfindung zeichnet sich gemäß einem ersten Aspekt aus durch ein Bordnetz für ein Kraftfahrzeug umfassend einen Spannungswandler mit einem ersten Anschluss und einem zweiten Anschluss. Das Bordnetz umfasst auch eine Spannungsquelle, die mit dem ersten Anschluss des Spannungswandlers elektrisch gekoppelt ist und ausgebildet ist, eine vorgegebene Quellenspannung bereitzustellen. Darüber hinaus umfasst das Bordnetz einen Basisenergiespeicher, der mit seinem ersten Anschluss mit dem zweiten Anschluss des Spannungswandlers und mit seinem zweiten Anschluss mit dem Bezugspotential elektrisch gekoppelt ist und ausgebildet ist, eine vorgegebene Basisspannung bereitzustellen. Die Quellenspannung der Spannungsquelle ist betragsmäßig größer ist als die Basisspannung. Ferner weist das Bordnetz zumindest eine erste Auswahl von zumindest einem ersten elektrischen Verbraucher auf, der elektrisch parallel zu dem Spannungswandler zwischen dem ersten Anschluss und dem zweiten Anschluss koppelbar angeordnet ist. Das Bordnetz umfasst auch zumindest eine zweite Auswahl von zumindest einem zweiten elektrischen Verbraucher, der elektrisch parallel zu dem Basisenergiespeicher zwischen den zweiten Anschluss und dem Bezugspotential koppelbar angeordnet ist.
Ein derartiges Bordnetz ermöglicht einen besonders verlustleistungsreduzierten Betrieb. Insbesondere wird eine dem Spannungswandler zugeordnete Verlustleistung dadurch reduziert, dass zumindest ein Teil eines Stromes zum Betreiben der gekoppelten und eingeschalteten Verbraucher nicht über den Spannungswandler geführt, sondern vorzugsweise direkt aus der Spannungsquelle und/oder dem Basisenergiespeicher den entsprechenden Verbrauchern zugeführt wird. Ist die Quellenspannung in etwa doppelt so groß wie die Basisspannung, wird die zumindest eine erste Auswahl und die zumindest eine zweite Auswahl mit jeweils in etwa der gleichen Spannung beaufschlagt. Die der zumindest einen ersten Auswahl zugeordnete Spannung resultiert aus einer Differenz der Quellenspannung und Basisspannung. Die Quellenspannung und die Basisspannung sind vorzugsweise jeweils eine Gleichspannung.

Der Spannungswandler kann beispielsweise als Spannungsregler, so z.B. als Schaltregler, ausgebildet sein. Er kann auch beispielsweise als unidirektionaler Wandler ausgebildet sein und somit abhängig von der Quellenspannung an dem ersten Anschluss ausgangsseitig an seinem zweiten Anschluss die Basisspannung und/oder einen Basisstrom bereitstellen. Dies trägt dazu bei, dass Unterspannungen am zweiten Anschluss ausgeglichen werden. Der Spannungswandler kann aber beispielsweise auch als bidirektionaler Wandler ausgebildet sein und zusätzlich zum unidirektionalen Wandler auch abhängig von der Basisspannung am zweiten Anschluss die Quellenspannung und/oder einen Quellenstrom an dem ersten Anschluss zur Verfügung stellen. Dabei können vorzugsweise auch Überspannungen am zweiten Anschluss mittels des bidirektionalen Spannungswandlers ausgeglichen werden. Dies ermöglicht eine Symmetrierung dahingehend, dass beispielsweise die erste Auswahl und die zweite Auswahl mit jeweils in etwa identischen Spannungen beaufschlagt werden.

Der zumindest eine erste Verbraucher der ersten Auswahl und der zumindest eine zweite Verbraucher der zweiten Auswahl können ein- und ausschaltbar ausgebildet sein und somit abhängig von deren Schaltzustand mit der jeweiligen Spannung beaufschlagt werden. Der ersten Auswahl können beispielsweise Hochstromverbraucher zugeordnet sein, so z.B. ein Startsystem. Vorzugsweise ist eine Leistungsaufnahme der ersten Auswahl kleiner als eine Leistungsaufnahme der zweiten Auswahl. Insbesondere bei einer Verwendung eines unidirektionalen Spannungswandlers kann dies dazu beitragen, dass eine zum Betreiben der zweiten Auswahl erforderliche Energie von dem ersten Anschluss zu dem zweiten Anschluss des Spannungswandlers übertragen wird. Ist die Leistungsaufnahme der ersten Auswahl kleiner kann, diese gegebenenfalls nur eingeschränkt oder gar nicht betrieben werden, insbesondere bei der Verwendung eines unidirektionalen Spannungswandlers, der elektrische Energie von seinem ersten Anschluss zu seinem zweiten Anschluss überträgt. Dies kann insbesondere durch die Verwendung eines bidirektionalen Spannungswandlers ermöglicht werden.

Der Energiespeicher kann beispielsweise als Bleiakkumulator ausgebildet sein, wobei auch andere Ausführungen verwendbar sind.

In einer weiteren vorteilhaften Ausgestaltung des ersten Aspekts umfasst die Spannungsquelle einen weiteren Energiespeicher und/oder einen Generator zur Bereitstellung der Quellenspannung. Der Generator kann beispielsweise eine Lichtmaschine des Kraftfahrzeugs sein. Der weitere Energiespeicher ist beispielweise als Li-Ionen-Akkumulator ausgebildet und kann in Kraftfahrzeugen, insbesondere Hybridfahrzeugen, die eine Energierückgewinnungseinrichtung umfassen, so z.B. während eines Bremsvorgangs, als Rekuperationsspeicher bezeichnet werden. Der Generator wird zumindest zeitweise während eines Betriebs des Kraftfahrzeugs betrieben, um in etwa die Quellenspannung bereitzustellen, wobei die Quellenspannung auch eine Spannung umfasst, die von dem Generator bereitgestellt wird, um eine zuverlässige Ladung des weiteren Energiespeichers und/oder des Basisenergiespeichers zu ermöglichen. Der Generator kann auch während einer Rekuperationsphase, d.h. während einer Energierückspeisung beispielsweise während des Bremsvorgangs oder während eines Schubbetriebs des Kraftfahrzeugs, betrieben werden, um beispielsweise eine Bewegungsenergie des Kraftfahrzeugs in elektrische Energie umzuwandeln. Der Generator kann beispielsweise auch als Starter-Generator ausgebildet sein und somit auch zum Starten einer Brennkraftmaschine des Kraftfahrzeugs dienen. Sind beide Komponenten vorhanden, ist der Generator vorzugsweise elektrisch parallel zu dem weiteren Energiespeicher gekoppelt.

Die Erfindung zeichnet sich gemäß einem zweiten Aspekt aus durch ein Bordnetz für ein Kraftfahrzeug, das einen Energiespeicher und einen Basisenergiespeicher umfasst. Beide Energiespeicher sind elektrisch in Reihe geschaltet. Der Energiespeicher ist ausgebildet, eine vorgegebene Spannung bereitzustellen. Der Basisenergiespeicher ist ausgebildet, eine vorgegebene Basisspannung bereitzustellen. Das Bordnetz weist auch eine Spannungsquelle auf, die mit dem Energiespeicher elektrisch koppelbar ist und ausgebildet ist, eine Quellenspannung bereitzustellen. Die Quellenspannung ist in etwa so groß wie eine Summe aus der Spannung und der Basisspannung. Darüber hinaus umfasst das Bordnetz zumindest eine erste Auswahl von zumindest einem ersten elektrischen Verbraucher, der elektrisch parallel zu dem Energiespeicher koppelbar angeordnet ist. Des Weiteren weist das Bordnetz zumindest eine zweite Auswahl von zumindest einem zweiten elektrischen Verbraucher auf, der elektrisch parallel zu dem Basisenergiespeicher koppelbar angeordnet ist.

Dies ermöglicht ein besonders einfaches und kostengünstiges Bordnetz mit einem verlustleistungsreduzierten Betrieb. Insbesondere wird ein Teil eines Stromes zum Betreiben der gekoppelten und eingeschalteten Verbraucher nicht über den Basisenergiespeicher geführt, sondern vorzugsweise direkt aus der Spannungsquelle und/oder dem Energiespeicher. Die Spannungsquelle umfasst vorzugsweise nur den Generator zur Bereitstellung der Quellenspannung.

In einer vorteilhaften Ausgestaltung des ersten und zweiten Aspekts ist eine der zumindest einen ersten Auswahl einer der zumindest einen zweiten Auswahl zugeordnet und zwar derart, dass die jeweils erste Auswahl in etwa eine gleiche Leistungsaufnahme aufweist wie die zugeordnete zweite Auswahl. Die erste Auswahl umfasst eine vorgegebene Anzahl von ersten elektrischen Verbrauchern und die zweite Auswahl umfasst eine vorgegebene Anzahl von zweiten elektrischen Verbrauchern, wobei der ersten Auswahl bzw. der zweiten Auswahl jeweils auch nur ein entsprechender elektrischer Verbraucher zugeordnet sein kann. Die erste und zugeordnete zweite Auswahl repräsentieren somit in etwa eine symmetrische Last. Dies hat den Vorteil, dass die erste und zugeordnete zweite Auswahl im Wesentlichen durch den Quellenstrom durchflossen werden, wodurch der Spannungswandler und/oder der Basisenergiespeicher entlastet werden kann.

Grundsätzlich können auch mehr als eine erste Auswahl und mehr als eine zweite Auswahl vorhanden sein.

In einer weiteren vorteilhaften Ausgestaltung des ersten und zweiten Aspekts sind die jeweils erste Auswahl und die zugeordnete zweite Auswahl so vorgegeben, dass beide in etwa einen gleichen zeitlichen Verlauf der Leistungsaufnahme aufweisen. Dies kann beispielsweise dadurch erfolgen, dass der zumindest eine erste Verbraucher der ersten Auswahl und der zumindest eine zweite Verbraucher der zugeordneten zweiten Auswahl in etwa zeitgleich ein- und ausschaltbar sind. Dies ermöglicht eine symmetrische Last und einen verlustleistungsreduzierten Betrieb des Bordnetzes. Es können auch Verbraucher der jeweiligen Auswahl vorgegeben sein, die auch während ihres Betriebs unterschiedliche Leistungsaufnahmen zu unterschiedlichen Zeitpunkten aufweisen.

In einer weiteren vorteilhaften Ausgestaltung des ersten und zweiten Aspekts umfasst das Bordnetz zumindest einen weiteren Verbraucher, der elektrisch parallel zu der Spannungsquelle koppelbar ist. Auch diese Anordnung des zumindest einen weiteren elektrischen Verbrauchers kann dazu beitragen, dass ein durch den Spannungswandler und/oder Basisenergiespeicher bereitgestellter Strom reduziert werden kann. Insbesondere resultiert daraus ein reduzierter Strombedarf aus der Spannungsquelle, da der zumindest eine weitere Verbraucher an der Quellenspannung betrieben wird, die betragsmäßig größer ist als die Basisspannung. Vorzugsweise sind spannungsunempfindliche Lasten, so z.B. Sitzheizung, Heckscheibenheizung, Lenkungssystem, als weitere Verbraucher einsetzbar.

Vorzugsweise ist der ersten Auswahl und/oder zweiten Auswahl jeweils zumindest ein sicherheitskritischer elektrischer Verbraucher zugeordnet.

Die Erfindung zeichnet sich gemäß einem dritten und vierten Aspekt aus durch ein Verfahren und eine korrespondierende Vorrichtung zum Betreiben eines Bordnetzes gemäß dem ersten Aspekt, bei dem Fehler in dem Spannungswandler zugeordneten Leitungsabschnitten und/oder des Spannungswandlers detektiert werden. Abhängig von der Detektierung werden der oder die ersten Verbraucher zumindest einer der zumindest einen ersten Auswahl eingeschaltet. Dies hat den Vorteil, dass der Basisenergiespeicher über die zumindest eine eingeschaltete erste Auswahl weiterhin geladen werden kann. Ferner ist es möglich, zumindest einen zweiten elektrischen Verbraucher oder zumindest eine zweite Auswahl zu betreiben. Dies ermöglicht einen besonders zuverlässigen Betrieb des Kraftfahrzeugs. Die dem Spannungswandler zugeordneten Leitungsabschnitte umfassen beispielsweise Zuleitungen zu dem Spannungswandler und Leitungen, die zwischen dem Spannungswandler und dem jeweiligen von ihm versorgten elektrischen Verbraucher angeordnet sind.

Ausführungsbeispiele der Erfindung sind im Folgenden anhand der schematischen Darstellungen näher erläutert. Es zeigen:
- Fig. 1: erste schematische Darstellung eines Bordnetzes,
- Fig. 2: zweite schematische Darstellung eines Bordnetzes.

Elemente gleicher Konstruktion oder Funktion sind figurenübergreifend mit den gleichen Bezugszeichen versehen.

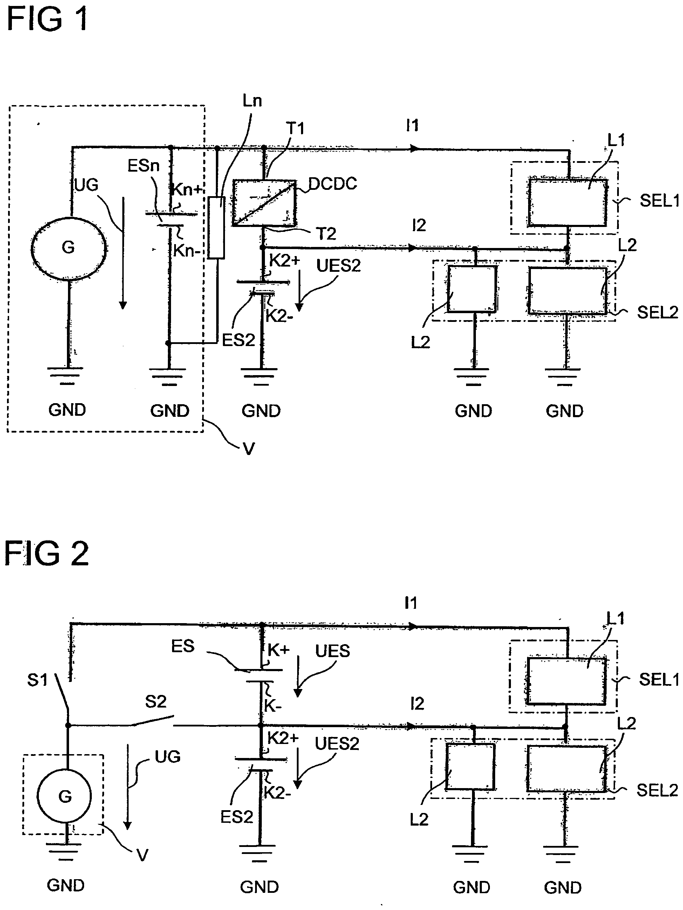

Figur 1 zeigt eine schematische Darstellung eines Bordnetzes für ein Kraftfahrzeug. Das Bordnetz umfasst eine Spannungsquelle V, die einen weiteren Energiespeicher ESn umfasst, der beispielsweise als Li-Ionen-Akkumulator ausgebildet ist. Das Kraftfahrzeug, so z.B. ein Hybrid- oder Elektrofahrzeug, kann beispielsweise eine Energierückgewinnungseinrichtung umfassen, um eine Bewegungsenergie des Kraftfahrzeugs in elektrische Energie zurückzugewinnen, so z.B. während eines Bremsvorgangs des Kraftfahrzeugs. In diesem Fall kann der weitere Energiespeicher ESn auch als Rekuperationsspeicher bezeichnet werden und während einer Rekuperationsphase geladen werden. Der weitere Energiespeicher ESn ist ausgebildet, eine Quellenspannung UG zur Verfügung zu stellen, so z.B. 24 V.

Das Bordnetz umfasst ferner einen Basisenergiespeicher ES2, der beispielsweise als Blei-Akkumulator ausgebildet ist und eine Basisspannung UES2 zur Verfügung stellt, so z.B. 12 V. Ein Wert der Quellenspannung UG ist vorzugsweise größer als ein Wert der Basisspannung UES2.

Das Bordnetz weist darüber hinaus einen Spannungswandler DCDC mit einem ersten Anschluss T1 und einem zweiten Anschluss T2 auf. Der Spannungswandler DCDC ist beispielsweise als unidirektionaler Spannungswandler ausgebildet, so z.B. als Linearregler. Der weitere Energiespeicher ESn weist einen ersten Anschluss, so z.B. einen Plus-Pol, und einen zweiten Anschluss, so z.B. einen Minus-Pol auf. Der erste Anschluss kann auch als erste Klemme Kn+ und der zweite Anschluss kann auch als zweite Klemme Kn- des weiteren Energiespeichers ESn bezeichnet werden. Der weitere Energiespeicher ESn ist mit seiner ersten Klemme Kn+ mit dem ersten Anschluss T1 des Spannungswandlers DCDC und mit seiner zweiten Klemme Kn- mit einem Bezugspotential GND, so z.B. einem Massepotential des Kraftfahrzeugs, elektrisch gekoppelt.

Auch der Basisenergiespeicher ES2 weist einen ersten Anschluss, so z.B. einen Plus-Pol, und einen zweiten Anschluss, so z.B. einen Minus-Pol, auf, wobei der erste Anschluss als erste Klemme K2+ und der zweite Anschluss als zweite Klemme K2- bezeichnet werden kann. Der Basisenergiespeicher ES2 ist vorzugsweise mit seiner ersten Klemme K2+ mit dem zweiten Anschluss T2 des Spannungswandlers DCDC und mit seiner zweiten Klemme K2- mit dem Bezugspotential GND elektrisch gekoppelt.

Die Spannungsquelle V weist ferner einen Generator G auf, der vorzugsweise elektrisch parallel zu dem weiteren Energiespeicher ESn angeordnet ist und beispielsweise als Lichtmaschine des Kraftfahrzeugs dient. Der Generator G wird vorzugsweise während eines Betriebs des Kraftfahrzeugs zumindest zeitweise betrieben und ist während seines Betriebs ausgebildet, in etwa die Quellenspannung UG bereitzustellen. Von dieser abhängig kann der weitere Energiespeicher ESn und/oder der Basisenergiespeicher ES2 mittels des Spannungswandlers DCDC geladen werden und/oder Verbraucher im Bordnetz betrieben werden.

Das Bordnetz umfasst zumindest einen ersten elektrischen Verbraucher L1 und zumindest einen zweiten elektrischen Verbraucher L2, die jeweils zumindest teilweise ein- und ausschaltbar sein können.

Der erste elektrische Verbraucher L1 ist elektrisch parallel zu dem Spannungswandler DCDC koppelbar und mit einer Spannung beaufschlagbar, die aus einer Differenz der Quellenspannung UG und Basisspannung UES2 resultiert, so z.B. 12 V. Der zweite elektrische Verbraucher L2 ist zwischen dem zweiten Anschluss T2 und dem Bezugspotential GND elektrisch koppelbar angeordnet und mit der Basisspannung UES2 beaufschlagbar. Es können auch mehrere erste elektrische Verbraucher L1 und mehrere zweite elektrische Verbraucher L2 vorgesehen sein, wobei eine Anzahl der ersten elektrischen Verbraucher L1 nicht zwangsläufig zu einer Anzahl der zweiten elektrischen Verbraucher L2 korrespondieren muss.

Eine erste Auswahl SEL1 der ersten elektrischen Verbraucher L1 umfasst eine vorgegebene Anzahl von ersten elektrischen Verbrauchern L1 und eine zweite Auswahl SEL2 der zweiten elektrischen Verbraucher L2 umfasst eine vorgegebene Anzahl von zweiten elektrischen Verbrauchern L2, und zwar vorzugsweise derart, dass eine resultierende Leistungsaufnahme der ersten Auswahl SEL1 in etwa gleich groß ist zu einer resultierenden Leistungsaufnahme der zweiten Auswahl SEL2. Ferner kann die jeweilige erste Auswahl SEL1 und die zugeordnete zweite Auswahl SEL2 derart vorgegeben sein, dass beide in etwa einen gleichen zeitlichen Verlauf der Leistungsaufnahme aufweisen. So kann z.B. der zumindest eine erste elektrische Verbraucher L1 der ersten Auswahl SEL1 in etwa zeitgleich zu dem zumindest einen zweiten elektrischen Verbrauchern L2 der zugeordneten zweiten Auswahl SEL2 ein- und ausschaltbar sein. Die jeweilige erste Auswahl SEL1 kann somit der zweiten Auswahl SEL2 dahingehend zugeordnet sein, dass beide eine in etwa symmetrische Last repräsentieren. Der ersten Auswahl SEL1 bzw. der zweiten Auswahl SEL2 kann auch jeweils nur ein entsprechender elektrischer Verbraucher zugeordnet sein. Grundsätzlich können auch mehr als eine erste Auswahl SEL1 und mehr als eine zweite Auswahl SEL2 vorhanden sein. Der erste elektrische Verbraucher L1 kann beispielsweise als linker Scheinwerfer, linke Rückleuchte und/oder linkes Bremslicht und der zweite elektrische Verbraucher L2 kann beispielsweise als rechter Scheinwerfer, rechte Rückleuchte und/oder rechtes Bremslicht ausgebildet sein. Auch sicherheitskritische Systeme des Kraftfahrzeugs, die vorzugsweise eine redundante Energieversorgung benötigen, können mittels des Bordnetzes betrieben werden. So kann beispielsweise im Falle eines elektromechanischen Bremssystems ein der Hinterachse des Kraftfahrzeugs zugeordneter Bremskreis der ersten Auswahl zugeordnet sein und ein der Vorderachse des Kraftfahrzeugs zugeordneter Bremskreis der zweiten Auswahl zugeordnet sein.

Der zumindest eine erste elektrische Verbraucher L1 der ersten Auswahl SEL1 und der zumindest eine zweite elektrische Verbraucher L2 der zweiten Auswahl SEL2 werden von einem Quellenstrom I1 durchflossen. Idealerweise sind die Leistungsaufnahme der ersten Auswahl SEL1 und die Leistungsaufnahme der zugeordneten zweiten Auswahl SEL2 identisch, so dass durch beide ein gleich großer Quellenstrom I1 fließt. In diesem Fall wird von dem Spannungswandler DCDC und/oder dem Basisenergiespeicher ES2 zum Betreiben der ersten und zugeordneten zweiten Auswahl SEL1, SEL2 vorzugsweise kein Strom zur Verfügung gestellt. In der Praxis können aber beispielsweise Bauteiltoleranzen zu unterschiedlichen Leistungsaufnahmen der entsprechenden Verbraucher führen, so dass gegebenenfalls Ausgleichsströme auch von dem Spannungswandler DCDC und/oder dem Basisenergiespeicher ES2 bereitgestellt werden, um beispielsweise die zweite Auswahl SEL2 mit einer vorgegebenen Leistung betreiben zu können. Dabei wird zumindest der resultierende Basisstrom I1 nicht über den Spannungswandler DCDC bereitgestellt und entlastet diesen dadurch.

Grundsätzlich ist es aber auch möglich, zumindest einen ersten elektrischen Verbraucher L1 und/oder zumindest einen zweiten elektrischen Verbraucher L2 nicht einer jeweiligen Auswahl SEL1, SEL2 zuzuordnen und somit nicht symmetrisch zu betreiben. In diesem Fall können gegebenenfalls höhere Ausgleichsströme durch den Spannungswandler DCDC und/oder Basisenergiespeicher ES2 bereitgestellt oder abgeführt werden.

Der Spannungswandler DCDC kann beispielsweise auch als bidirektionaler Wandler, so z.B. als Schaltregler, ausgebildet sein. Dadurch ist er in der Lage auch abhängig von der Basisspannung UES2 an seinem zweiten Anschluss T2 in etwa die Quellenspannung UG an seinem ersten Anschluss T1 dem zumindest einen ersten elektrischen Verbraucher L1 bereitzustellen. In diesem Fall wird zumindest ein resultierender Basisstrom I2 beispielsweise zur Versorgung nicht-symmetrischer Lasten, der beispielsweise von dem Basisenergiespeicher ES2 zur Verfügung gestellt wird, nicht durch den Spannungswandler DCDC bereitgestellt, wodurch auch hier ein verlustleistungsreduzierter Betrieb des Bordnetzes ermöglicht wird.

Eine Verwendung des Spannungswandlers DCDC hat grundsätzlich den Vorteil, eine höhere Spannungsstabilität im Vergleich zu dem Generator G zu ermöglichen. Beispielsweise kann der Spannungswandler DCDC die bereitgestellte Basisspannung UES2 und die Differenzspannung, die aus der Differenz der Quellenspannung UG und der Basisspannung UES2 resultiert, symmetrisieren und damit ungleiche Versorgungszustände, so z.B. unterschiedliche Lichthelligkeit an dem rechten und linken Scheinwerfer, vermeiden. Ferner kann durch den Spannungswandler DCDC ein Energietransfer von dem weiteren Energiespeicher ESn zu dem Basisenergiespeicher ES2 derart erfolgen, dass dieser soweit geladen ist, dass elektrische Verbraucher auch nach längeren Standzeiten des Kraftfahrzeugs weiterhin betrieben werden können oder überhaupt eine Startfähigkeit des Kraftfahrzeugs sichergestellt werden kann.

Grundsätzlich wird zumindest ein Teil des zum Betreiben der elektrischen Verbraucher erforderlichen Stromes nicht über den Spannungswandler DCDC bereitgestellt, so dass dadurch die Verlustleistung, insbesondere die stromabhängige Verlustleistung, des Spannungswandlers DCDC reduziert wird, so dass ein effizienter Betrieb des Bordnetzes ermöglicht wird. Ferner kann auch ein Verbrauch, insbesondere Kraftstoffverbrauch, des Kraftfahrzeugs reduziert werden. Gegebenenfalls kann der Spannungswandler DCDC auch kleiner dimensioniert werden im Vergleich zu einem Betrieb in dem er den Strom für alle elektrischen Verbraucher liefert. Dies ermöglicht auch ein kostengünstiges Bordnetz.

Wird beispielsweise erkannt, so z.B. durch eine Energiemanagementeinheit des Kraftfahrzeugs, dass ein oder mehrere dem Spannungswandler DCDC zugeordnete Leitungsabschnitte und/oder der Spannungswandler DCDC fehlerbehaftet ist, so kann beispielsweise zumindest eine zugeordnete erste Auswahl SEL1 eingeschaltet werden, um zumindest einen eingeschalteten zweiten elektrischen Verbraucher L2 der zweiten Auswahl SEL2 weiterhin betreiben zu können. Alternativ oder zusätzlich kann in dem Fehlerfall auch der Basisenergiespeicher ES2 weiterhin über die zumindest eine eingeschaltete erste Auswahl SEL1 geladen werden. Dies ist vorteilhaft, wenn der ersten und/oder zweiten Auswahl sicherheitskritische elektrische Verbraucher zugeordnet sind, die eine redundante Energieversorgung benötigen, so z.B. ein elektromechanisches Bremssystem, da dadurch im Fehlerfall ein weiterer Betrieb dieser Verbraucher ermöglicht wird.

Grundsätzlich ist es auch möglich, während des Betriebs des Bordnetzes die erste Auswahl SEL1 und/oder die zweite Auswahl SEL2 dynamisch vorzugeben, so z.B. hinsichtlich der Anzahl der Verbraucher je Auswahl und/oder einer Summe der resultierenden Leistungsaufnahme der Verbraucher je Auswahl. Die jeweilige erste Auswahl SEL1 und/oder zugeordnete zweite Auswahl SEL2 können aber auch vorgegeben sein.

Darüber hinaus kann das Bordnetz auch zumindest einen weiteren elektrischen Verbraucher Ln aufweisen, der elektrisch parallel zu der Spannungsquelle V koppelbar ist. Der zumindest eine weitere elektrische Verbraucher Ln wird im eingeschalteten Zustand vorzugsweise mit der Quellenspannung UG beaufschlagt und ist vorzugsweise spannungsunempfindlich, so z.B. Sitzheizung, Heckscheibenheizung, oder leistungsintensiv, so z.B. Lenkungssystem. Auch dies trägt zu einer Reduzierung der Verlustleistung des Bordnetzes bei, da auch hier der erforderliche Strom für den zumindest einen weiteren elektrischen Verbraucher Ln vorzugsweise nicht über den Spannungswandler DCDC und/oder Basisenergiespeicher ES2 bereitgestellt wird.

In Figur 2 ist eine weitere Ausführungsform des Bordnetzes schematisch dargestellt. Das Bordnetz umfasst die Spannungsquelle V, die vorzugsweise nur den Generator G umfasst. Im Vergleich zu der Figur 1 ist der Basisenergiespeicher ES2 elektrisch in Serie mit einem Energiespeicher ES gekoppelt und über diesen mit der Spannungsquelle V elektrisch gekoppelt. Der Energiespeicher ES ist ausgebildet, eine vorgegebene Spannung UES bereitzustellen. Vorzugsweise ist die vorgegebene Spannung UES in etwa gleich groß zu der Basisspannung UES2. Die erste Auswahl bzw. die zweite Auswahl korrespondiert zu der ersten bzw. zweiten Auswahl des Bordnetzes gemäß der Figur 1. Das in Figur 2 dargestellte Bordnetz ermöglicht eine Entlastung des Basisenergiespeichers, wenn die erste und zugeordnete zweite Auswahl entsprechend vorgegeben sind.

Als erste elektrische Verbraucher L1 können beispielsweise Hochleistungsverbraucher, so z.B. Verbraucher mit einer Leistungsaufnahme von mehr als 500 W wie beispielsweise ein Lenkungssystem oder ein Startsystem der ersten Auswahl zugeordnet werden.

Der Generator G kann mittels eines ersten und zweiten Schaltelements S1, S2 sehr flexible betrieben werden. Vorzugsweise ist der Generator G ausgebildet, abhängig von einer ihm zugeordneten Ansteuerung entweder die Quellenspannung UG oder in etwa die Basisspannung UES2 bereitzustellen. So kann beispielsweise durch entsprechende Ansteuerung des ersten Schaltelements S1 während einer Rekuperationsphase der Generator G derart betrieben werden, dass dieser den Energiespeicher ES und den Basisenergiespeicher ES2 auflädt und/oder die zumindest eine erste Auswahl SEL1 und/oder die zumindest eine zweite Auswahl SEL2 betreibt. Bei entsprechender Ansteuerung des zweiten Schaltelements S2 kann beispielsweise nur der Basisenergiespeicher ES2 und/oder die zumindest eine zweite Auswahl SEL2 betrieben werden. Das erste und zweite Schaltelement S1, S2 können beispielsweise durch die Energiemanagementeinheit angesteuert werden.

### Bezugszeichenliste

- ES: Energiespeicher
- ESn: weiterer Energiespeicher
- ES2: Basisenergiespeicher
- DCDC: Spannungswandler
- G: Generator
- GND: Bezugspotential
- I1: Quellenstrom
- I2: Basisstrom
- K+, K2+, Kn+: erste Klemme
- K-, K2-, Kn-: zweite Klemme
- L1: erster elektrischer Verbraucher
- L2: zweiter elektrischer Verbraucher
- Ln: weiterer elektrischer Verbraucher
- S1, S2: Schaltelementes
- SEL1: erste Auswahl
- SEL2: zweite Auswahl
- T1: erster Anschluss des Spannungswandlers
- T2: zweiter Anschluss des Spannungswandlers
- V: Spannungsquelle
- UES: Spannung
- UES2: Basisspannung
- UG: Quellenspannung

## Patentansprüche

1. Bordnetz für ein Kraftfahrzeug umfassend
- einen Spannungswandler (DCDC) mit einem ersten Anschluss (T1) und einem zweiten Anschluss (T2),
- eine Spannungsquelle (V), die mit dem ersten Anschluss (T1) des Spannungswandlers (DCDC) elektrisch gekoppelt ist und ausgebildet ist, eine vorgegebene Quellenspannung (UG) bereitzustellen,
- einen Basisenergiespeicher (ES2), der mit seinem ersten Anschluss mit dem zweiten Anschluss (T2) des Spannungswandlers (DCDC) und mit seinem zweiten Anschluss mit dem Bezugspotential (GND) elektrisch gekoppelt ist und ausgebildet ist, eine vorgegebene Basisspannung (UES2) bereitzustellen, wobei die vorgegebene Quellenspannung (UG) der Spannungsquelle (V) betragsmäßig größer ist als die Basisspannung (UES2),
- zumindest eine erste Auswahl (SEL1) von zumindest einem ersten elektrischen Verbraucher (L1), der elektrisch parallel zu dem Spannungswandler (DCDC) **zwischen dem ersten Anschluss (T1) und dem zweiten Anschluss (T2)** koppelbar angeordnet ist,
- zumindest eine zweite Auswahl (SEL2) von zumindest einem zweiten elektrischen Verbraucher (L2), der elektrisch parallel zu dem Basisenergiespeicher (ES2) **zwischen dem zweiten Anschluss (T2) und dem Bezugspotential** koppelbar angeordnet ist.

2. Bordnetz nach Anspruch 1, bei dem der Spannungswandler (DCDC) als bidirektionaler Wandler ausgebildet ist.

3. Bordnetz nach Anspruch 1, bei dem die Spannungsquelle (V) einen weiteren Energiespeicher (ESn) und/oder einen Generator umfasst zur Bereitstellung der vorgegebenen Quellenspannung (UG) .

4. Bordnetz für ein Kraftfahrzeug umfassend
- einen Energiespeicher (ES) und einen Basisenergiespeicher (ES2), die elektrisch in Reihe geschaltet sind, wobei der Energiespeicher (ES) ausgebildet ist, eine vorgegebene Spannung (UES) bereitzustellen und der Basisenergiespeicher (ES2) ausgebildet ist, eine vorgegebene Basisspannung (UES2) bereitzustellen,
- eine Spannungsquelle (V), die mit dem Energiespeicher (ES) elektrisch koppelbar ist und ausgebildet ist, eine Quellenspannung (UG) bereitzustellen, die in etwa so groß ist wie eine aus der Spannung (UES) und der Basisspannung (UES2) resultierende Summe,
- zumindest eine erste Auswahl (SEL1) von zumindest einem ersten elektrischen Verbraucher (L1), der elektrisch parallel zu dem Energiespeicher (ES) koppelbar angeordnet ist,
- zumindest eine zweite Auswahl (SEL2) von zumindest einem zweiten elektrischen Verbraucher (L2), der elektrisch parallel zu dem Basisenergiespeicher (ES2) koppelbar angeordnet ist.

5. Bordnetz nach einem der vorstehenden Ansprüche, bei dem eine der zumindest einen ersten Auswahl (SEL1) einer der zumindest einen zweiten Auswahl (SEL2) zugeordnet ist und zwar derart, dass die jeweils erste Auswahl (SEL1) in etwa eine gleiche Leistungsaufnahme aufweist wie die zugeordnete zweite Auswahl (SEL2).

6. Bordnetz nach einem der vorstehenden Ansprüche, bei dem die jeweils erste Auswahl (SEL1) und die zugeordnete zweite Auswahl (SEL2) so vorgegeben sind, dass beide in etwa einen gleichen zeitlichen Verlauf der Leistungsaufnahme aufweisen.

7. Bordnetz nach einem der vorstehenden Ansprüche, das zumindest einen weiteren Verbraucher (Ln) umfasst, der elektrisch parallel zu der Spannungsquelle (V) koppelbar ist.

8. Verfahren zum Betreiben eines Bordnetzes nach einem der Ansprüche 1 bis 3, bei dem
- Fehler in dem Spannungswandler (DCDC) zugeordneten Leitungsabschnitten und/oder des Spannungswandlers (DCDC) detektiert werden,
- abhängig von der Detektierung der oder die ersten Verbraucher zumindest einer der zumindest einen ersten Auswahl (SEL1) eingeschaltet werden.

9. Vorrichtung zum Betreiben eines Bordnetzes nach einem der Ansprüche 1 bis 3, die ausgebildet ist
- Fehler in dem Spannungswandler (DCDC) zugeordneten Leitungsabschnitten und/oder des Spannungswandlers (DCDC) zu detektieren,
- abhängig von der Detektierung den oder die ersten Verbraucher zumindest einer der zumindest einen ersten Auswahl (SEL1) einzuschalten.

## Claims

1. An on-board power supply system for a motor vehicle, comprising
- a voltage converter (DCDC) having a first connection (T1) and a second connection (T2),
- a voltage source (V), which is electrically coupled to the first connection (T1) of the voltage converter (DCDC) and is designed to provide a predefined source voltage (UG),
- a base energy accumulator (ES2), which is electrically coupled by means of its first connection to the second connection (T2) of the voltage converter (DCDC) and by means of its second connection to the reference potential (GND) and is designed to provide a predefined base voltage (UES2), wherein the predefined source voltage (UG) of the voltage source (V) is greater than the base voltage (UES2),
- at least one first selection circuit (SEL1) of at least one first electrical load (L1), which is arranged such that it can be coupled electrically parallel to the voltage converter (DCDC) between the first connection (T1) and the second connection (T2),
- at least one second selection circuit (SEL2) of at least one second electrical load (L2), which is arranged such that it can be coupled electrically parallel to the base energy accumulator (ES2) between the second connection (T2) and the reference potential.

2. An on-board power supply system according to claim 1, in which the voltage converter (DCDC) is designed as a bidirectional converter.

3. An on-board power supply system according to claim 1, in which the voltage source (V) comprises a further energy accumulator (ESn) and/or a generator for providing the predefined source voltage (UG).

4. An on-board power supply system for a motor vehicle, comprising
- an energy accumulator (ES) and a base energy accumulator (ES2), which are electrically connected in series, wherein the energy accumulator (ES) is designed to provide a predefined voltage (UES) and the base energy accumulator (ES2) is designed to provide a predefined base voltage (UES2),
- a voltage source (V), which can be electrically coupled to the energy store (ES) and is designed to provide a source voltage (UG) which is approximately the same as the sum of the voltage (UES) and the base voltage (UES2),
- at least one first selection circuit (SEL1) of at least one first electrical load (L1), which is arranged such that it can be electrically coupled parallel to the energy accumulator (ES),
- at least one second selection circuit (SEL2) of at least one second electrical load (L2), which is arranged such that it can be electrically coupled parallel to the base energy accumulator (ES2).

5. An on-board power supply system according to any one of the preceding claims, in which one of the at least one first selection circuits (SEL1) is associated with one of the at least one second selection circuits (SEL2), more specifically in such a way that in each case the first selection circuit (SEL1) has approximately the same power consumption as the associated second selection circuit (SEL2).

6. An on-board power supply system according to any one of the preceding claims, in which in each case the first selection circuit (SEL1) and the associated second selection circuit (SEL2) are predefined so that both have approximately the same progression of power consumption over time.

7. An on-board power supply system according to any one of the preceding claims, which comprises at least one further load (Ln), which can be electrically coupled parallel to the voltage source (V).

8. A method for operating an on-board power supply system according to any one of claims 1 to 3, in which
- faults in power portions associated with the voltage converter (DCDC) and/or faults of the voltage converter (DCDC) are detected,
- depending on the detection, the one or more first loads of at least one of the at least one first selection circuits (SEL1) is/are switched on.

9. Apparatus for operating an on-board power supply system according to any one of claims 1 to 3, which apparatus is designed
- to detect faults in power portions associated with the voltage converter (DCDC) and/or faults of the voltage converter (DCDC),
- to switch on the one or more first loads of at least one of the at least one first selection circuits (SEL1) depending on the detection.

## Revendications

1. Réseau embarqué destiné à un véhicule comprenant :
- un transformateur de tension (DCDC) ayant une première borne de connexion (T1) et une seconde borne de connexion (T2),
- une source de tension (V) qui est couplée électriquement à la première borne de connexion (T1) du transformateur de tension (DCDC) et est réalisée pour fournir une tension de source prédéterminée (UG),
- un accumulateur d'énergie de base (ES2) qui est couplé électriquement par sa première borne de connexion à la seconde borne de connexion (T2) du transformateur de tension (DCDC) et par sa seconde borne de connexion au potentiel de référence (GND) et qui est réalisé pour fournir une tension de base (UES2) prédéfinie, la tension de source (UG) prédéfinie de la source de tension (V) étant supérieure à la tension de base (UES2),
- au moins une première sélection (SEL1) d'au moins un premier consommateur électrique (L1) qui peut être branchée électriquement en parallèle au transformateur de courant (DCDC) entre la première borne de connexion (T1) et la seconde borne de connexion (T2),
- au moins une seconde sélection (SEL2) d'au moins un second consommateur électrique (L2) qui peut être branchée électriquement en parallèle à l'accumulateur d'énergie de base (ES2) entre la seconde borne de connexion (T2) et le potentiel de référence.

2. Réseau embarqué conforme à la revendication 1,
dans lequel le transformateur de tension (DCDC) est réalisé sous la forme d'un transformateur bidirectionnel.

3. Réseau embarqué conforme à la revendication 1,
dans lequel la source de tension (V) comporte un autre accumulateur d'énergie (ESn) et/ou un générateur pour permettre de fournir la tension de source (UG) prédéfinie.

4. Réseau embarqué destiné à un véhicule comprenant :
- un accumulateur d'énergie (ES) et un accumulateur d'énergie de base (ES2) qui sont branchés électriquement en série, l'accumulateur d'énergie (ES) étant réalisé pour fournir une tension (UES) prédéfinie et l'accumulateur d'énergie de base (ES2) étant réalisé pour fournir une tension de base (UES2) prédéfinie,
- une source de tension (V) qui peut être couplée électriquement à l'accumulateur d'énergie (ES) et est réalisée pour fournir une tension de source (UG) qui est essentiellement égale à la somme résultant de la tension (UES) et de la tension de base (UES2),
- au moins une première sélection (SEL1) d'au moins un premier consommateur électrique (L1) qui peut être branchée électriquement en parallèle à l'accumulateur d'énergie (ES),
- au moins une seconde sélection (SEL2) d'au moins un second consommateur électrique (L2) qui peut être branchée électriquement en parallèle à l'accumulateur d'énergie de base (ES2).

5. Réseau embarqué conforme à l'une des revendications précédentes, dans lequel une première sélection (SEL1) est associée à une seconde sélection (SEL2) de sorte que la première sélection (SEL1) ait essentiellement une même consommation électrique que la seconde sélection (SEL2) qui lui est associée.

6. Réseau embarqué conforme à l'une des revendications précédentes, dans lequel la première sélection (SEL1) et la seconde sélection (SEL2) qui lui est associée sont réalisées de sorte que toutes deux aient essentiellement les mêmes variations en fonction du temps de la consommation électrique.

7. Réseau embarqué conforme à l'une des revendications précédentes, comprenant au moins un autre consommateur (Ln) qui peut être branché électriquement en parallèle à la source de tension (V).

8. Procédé de gestion d'un réseau embarqué conforme à l'une des revendications 1 à 3, selon lequel :
des défauts dans des segments de lignes associés au transformateur de tension (DCDC) et/ou du transformateur de tension (DCDC) sont détectés,
- en fonction de la détection le ou les premier(s) consommateur(s) est(sont) branché(s) à au moins une première sélection (SEL1).

9. Dispositif de gestion d'un réseau embarqué conforme à l'une des revendications 1 à 3 réalisé pour :
- détecter des défauts dans les segments de lignes associés au transformateur de tension (DCDC) et/ou du transformateur de tension (DCDC),
- en fonction de la détection brancher le(les) premier(s) consommateur(s) à au moins l'une des premières sélections.
